(19) Europäisches Patentamt
European Patent Office
Office européen des brevets

(11) **EP 4 510 209 A1**

(12) **EUROPEAN PATENT APPLICATION**
published in accordance with Art. 153(4) EPC

(43) Date of publication:
**19.02.2025 Bulletin 2025/08**

(21) Application number: **22959898.2**

(22) Date of filing: **28.09.2022**

(51) International Patent Classification (IPC):
**H01M 4/13** (2010.01)

(52) Cooperative Patent Classification (CPC):
**H01M 4/13; H01M 4/36; H01M 10/0525;**
Y02E 60/10

(86) International application number:
**PCT/CN2022/122013**

(87) International publication number:
**WO 2024/065250 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Fujian 352100 (CN)**

(72) Inventors:
• **TIAN, Yaxi
Ningde City, Fujian 352100 (CN)**

• **TANG, Daichun
Ningde City, Fujian 352100 (CN)**
• **WANG, Xitong
Ningde City, Fujian 352100 (CN)**
• **JI, Tingzhen
Ningde City, Fujian 352100 (CN)**
• **XIA, Yurun
Ningde City, Fujian 352100 (CN)**
• **QIN, Xiong
Ningde City, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **NEGATIVE ELECTRODE SHEET AND BATTERY MANUFACTURED THEREFROM**

(57) The present application relates to a negative electrode plate comprising a negative electrode material layer having a structure in which a high compaction region and a low compaction region are continuously and alternately arranged, and the low compaction region has an upper surface width and a lower surface width with a specific width difference. The present application further relates to a preparation method of the negative electrode plate, a secondary battery comprising a battery electrode plate composition of the negative electrode plate, a battery pack comprising the secondary battery and an electrical apparatus.

**FIG. 6**

**Description**

**TECHNICAL FIELD**

The present application relates to a negative electrode plate comprising a negative electrode material layer having a structure in which a high compaction region and a low compaction region are continuously and alternately arranged, and the low compaction region has an upper surface width and a lower surface width with a width difference. The present application further relates to a preparation method of the negative electrode plate, a secondary battery comprising the negative electrode plate, a battery pack comprising the secondary battery and an electrical apparatus.

**BACKGROUND ART**

Secondary batteries have become the most popular energy storage systems due to their low cost, long lifetime and good safety, and have been widely applied in all-electric vehicles, hybrid electric vehicles, smart grids and other fields. A secondary battery consists mainly of a positive electrode plate, a negative electrode plate, a separator and an electrolyte, wherein the negative electrode plate comprises a negative electrode current collector and a negative electrode material layer provided on at least one surface of the negative electrode current collector, and the negative electrode material layer comprises a negative electrode active substance. The negative electrode material layer needs to be infiltrated by an electrolyte solution, so that lithium intercalation can be achieved both on the surface and in the interior of the negative electrode material layer. To this end, in the prior art, the negative electrode material layer is generally made to contain a large number of pores to promote internal lithium intercalation, so that the electrolyte solution has a relatively high liquid transport rate inside the negative electrode material layer. In order to form internal pores, it is generally necessary to add a pore-forming agent to the mixture for preparing the negative electrode material layer. However, this increases the material costs, and moreover, these pore-forming agents need to be removed in the subsequent steps through cumbersome and expensive operations.

Therefore, there is still a need to provide a new negative electrode plate, which can have an increased liquid transport rate and an improved charging performance, and can achieve pore formation without using any pore-forming agent, thereby reducing the production cost.

**SUMMARY OF THE INVENTION**

The present application is made in view of the above topics, and an object thereof is to provide a negative electrode plate to solve the technical problems of insufficient liquid transport rate of the negative electrode plate and poor charging performance of the battery prepared therefrom.

In order to achieve the above object, a first aspect of the present application is to provide a negative electrode plate comprising a negative electrode current collector and a negative electrode material layer provided on at least one surface of the negative electrode current collector, with the negative electrode material layer comprising a negative electrode active substance, wherein the negative electrode material layer has a structure in which a high compaction region and a low compaction region are continuously and alternately arranged, the high compaction region has a density of 1.6-1.9 $g/cm^3$, the low compaction region has a density of 1.3-1.8 $g/cm^3$, and the density difference between the high compaction region and the low compaction region is 0.1-0.6 $g/cm^3$, optionally 0.2-0.4 $g/cm^3$,

Wherein the low compaction region has an upper surface width $x_1$ and a lower surface width $x_2$, and the difference between the upper surface width and the lower surface width is $0 \leq | x_1 - x_2 | \leq 100mm$.

By comprising a negative electrode material layer with a specific structure in the negative electrode plate of the present application, it is possible to have different porosities in different regions within the material layer without using any pore-forming agent, thereby increasing the liquid transport rate of the electrolyte solution in the negative electrode plate, and in turn improving the charging performance.

In any of embodiments, the difference between the upper surface width and the lower surface width of the low compaction region is $0 \leq |x_1 - x_2| \leq 120\mu m$, optionally $60\mu m \leq |x_1 - x_2| \leq 120\mu m$, and further optionally $80\mu m \leq |x_1 - x_2| \leq 120\mu m$. By further adjusting the difference between the upper surface width and the lower surface width of the low compaction region, the shape of the low compaction region can be changed, thereby controlling the transport rate of the electrolyte solution in the negative electrode material layer.

In any of embodiments, the width x of the low compaction region is $100\mu m$-100mm, optionally $200\mu m$-30mm. In any of embodiments, the width $m_i$ of the high compaction region is 10-100mm, optionally 20-60mm. The widths of the low compaction region and the high compaction region can be adjusted according to the length of the negative electrode plate to be prepared.

In any of embodiments, the negative electrode plate satisfies the following formula: $0.1 \leq n*m_i/L < 1$, where n is the number of the low compaction region, $m_i$ is the width of the high compaction region, and L is the length of the electrode plate. In additional embodiments, the direction of the low compaction region is defined as $\Theta$ which satisfies $\Theta_2 \leq \Theta \leq \Theta_1$, wherein $0 < \Theta_1 / \Theta_2 \leq 1$, and $\Theta_1$ and $\Theta_2$ are the included angles between the tangential directions on both sides of the low compaction region and the horizontal direction, respectively.

In any of embodiments, the cross-sectional structural shape of the low compaction region has a rectangular, trapezoidal or arc-shaped structure, or an irregular structure. In any of embodiments, the length directions of the low compaction region and the high compaction region are parallel to the direction of the negative electrode tab. In any of embodiments, the negative electrode current collector is a metal foil or a composite current collector, and the composite current collector comprises a high molecular material substrate layer and a metal layer formed on at least one surface of the high molecular material substrate layer. In additional embodiments, the negative electrode active substance is selected from one or more of graphite, soft carbon, hard carbon, mesocarbon microsphere, carbon fiber, carbon nanotube, elemental silicon, silicon-oxygen compound, silicon-carbon composite, and lithium titanate.

In any of embodiments, the densities in the low compaction regions may be the same or different; and in the case of different densities, the density difference between each of the low compaction regions is $\leq 0.5$ g/cm$^3$.

The present application further relates to a method for preparing the negative electrode plate of the first aspect of the present application, comprising the steps of:

Forming regions with different negative electrode active substance contents by adjusting the viscosities and/or weights of the negative electrode active substance coated on the current collector in different regions thereof; and
Cold pressing the negative electrode material layer so that it has the same thickness.

A second aspect of the present application is to provide a secondary battery comprising a negative electrode plate selected from the first aspect of the present application.

A third aspect of the present application is to provide a battery pack comprising a secondary battery selected from the second aspect of the present application.

A fourth aspect of the present application is to provide an electrical apparatus comprising a secondary battery selected from the second aspect of the present application or a battery pack selected from the third aspect of the present application.

**DESCRIPTION OF DRAWINGS**

In order to more clearly illustrate the technical solutions of the present application, the drawings to be used in Examples of the present application will be briefly introduced below. Apparently, the drawings described below are merely some Examples of the present application. For those of ordinary skills in the art, other drawings may also be obtained based on these drawings without making creative work.

Fig. 1 is a schematic view of a lithium-ion secondary battery in an embodiment of the present application.
Fig. 2 is an exploded view of the lithium-ion secondary battery in an embodiment of the present application shown in Fig. 1.
Fig. 3 is a schematic view of a battery pack in an embodiment of the present application.
Fig. 4 is an exploded view of the battery pack in an embodiment of the present application shown in Fig. 3.
Fig. 5 is a schematic view of an apparatus in which a battery pack in an embodiment of the present application is used as a power source.
Fig. 6 is a schematic view showing an alternate arrangement of a high compaction region and a low compaction region in a negative electrode plate in an embodiment of the present application.
Fig. 7 is a schematic view showing the directions of the regions with different densities and the direction of the tab in a negative electrode plate in an embodiment of the present application.

Description of reference numerals

1 Battery pack
2 Upper box body
3 Lower box body
4 Battery module
5. Lithium-ion secondary battery
51 Case
52 Electrode assembly

53 Cover plate

## DETAILED DESCRIPTION

For the sake of brevity, the present application specifically discloses some numerical ranges. However, any lower limit can be combined with any upper limit to form a range not explicitly recited; and any lower limit can be combined with another lower limit to form a range not explicitly recited, and likewise, any upper limit can be combined with any another upper limit to form a range not explicitly recited. Further, each individually disclosed point or single value itself may serve as a lower limit or an upper limit in combination with any other point or single value or with other lower limits or upper limits to form a range not explicitly recited.

With the rapid popularization of electric vehicles such as electric automobiles, the market's demand for lithium-ion batteries with strong charging performance is becoming increasingly urgent. To improve the charging performance of lithium batteries, an effective way is to increase the infiltration rate of the electrolyte solution into the negative electrode plate, so that even the lithium intercalation capability of the negative electrode active substance inside the negative electrode plate can be effectively maintained. However, as the surface of the negative electrode plate is easily passivated after lithium intercalation, and the intercalated lithium ions easily block the pores on the surface of the electrode plate, it is difficult for the subsequent lithium ions to penetrate deeply into the interior of the negative electrode active material layer for lithium intercalation. A conventional method in the prior art is to add a pore-forming agent into the mixture for preparing the negative electrode active material layer, so that the porosity inside the formed negative electrode active material layer is significantly increased. However, due to the uniformity of the porosity in the negative electrode active material layer, it is still difficult for the electrolyte solution to penetrate deeply into the interior of the negative electrode active material layer, as the liquid transport kinetics is insufficient in the case of uniform porosity. Additionally, in the prior art, one or more pore-forming agents selected from calcium oxide, magnesium oxide, germanium oxide and tin oxide are generally used, and these pore-forming agents need to be removed in a subsequent step. This not only increases the material cost, but also makes the preparation of the negative electrode plate more complicated and cumbersome.

Therefore, there is a need in the art to provide a new negative electrode plate, which has improved electrolyte solution transport rate and charging performance, and can be prepared without the use of pore-forming agents.

Specifically, a first aspect of the present application is to provide a negative electrode plate comprising a negative electrode current collector and a negative electrode material layer provided on at least one surface of the negative electrode current collector, with the negative electrode material layer comprising a negative electrode active substance, wherein the negative electrode material layer has a structure in which a high compaction region and a low compaction region are continuously and alternately arranged, the high compaction region has a density of 1.6-1.9 g/cm$^3$, the low compaction region has a density of 1.3-1.8 g/cm$^3$, and the density difference between the high compaction region and the low compaction region is 0.1-0.6 g/cm$^3$, optionally 0.2-0.4 g/cm$^3$,

Wherein the low compaction region has an upper surface width $x_1$ and a lower surface width $x_2$, and the difference between the upper surface width and the lower surface width is $0 \leq | x_1 - x_2 | \leq 100$mm.

The inventors have found that the negative electrode plate of the present application can significantly improve the transport rate of the electrolyte solution by comprising a negative electrode material layer with a specific structure, thereby obtaining improved charging performance. Without being bound by any theory, the inventors believe that by coating negative electrode active substances with different weights when preparing the active material layer of the negative electrode plate and pressing the negative electrode material layer to the same thickness in the subsequent cold pressing stage, different regions of the material layer can have different densities. By different densities, it means different porosity in each region; a region with low density has a high porosity, while a region with high density has a low porosity. As the electrolyte solution is transported from one region to the adjacent region, the different porosities of the adjacent regions allow the transport kinetics of the electrolyte solution to be improved, and the transport rate is increased, thereby increasing its infiltration capability into the negative electrode plate. The factors affecting the transport rate include both the density difference between adjacent regions, but also the shape features of the low compaction region, that is, the width difference between the upper and lower surfaces. The inventors have found that, by controlling the density difference between the high compaction region and the low compaction region, and the difference between the upper surface width and the lower surface width of the low compaction region within a specific range, a negative electrode plate with significantly improved liquid transport rate and charging performance can be obtained.

From a practical point of view, the respective densities of the high compaction region and the low compaction region of the negative electrode material layer of the negative electrode plate should be within a reasonable range, thus limiting the respective density ranges of the high compaction region and the low compaction region. The density of each region refers to the density of the negative electrode active substance contained therein. Additionally, one of the widths of the upper and lower surfaces of the low compaction region can be zero, i.e., including the case where the region intersects the surface at only one point. In particular, the negative electrode plate does not contain any pore-forming agent.

In some embodiments, the difference between the upper surface width and the lower surface width of the low compaction region is $0 \leq |x_1 - x_2| \leq 120 \mu m$, optionally $60 \mu m \leq |x_1 - x_2| \leq 120 \mu m$, and further optionally $80 \mu m \leq |x_1 - x_2| \leq 120 \mu m$. By further adjusting the difference between the upper surface width and the lower surface width of the low compaction region, the shape of the low compaction region can be changed, thereby controlling the transport rate of the electrolyte solution in the negative electrode material layer.

In some embodiments, the width x of the low compaction region is $100 \mu m$-100mm, optionally $200 \mu m$-30mm. In some embodiments, the width $m_i$ of the high compaction region is 10-100mm, optionally 20-60mm. The width x of the low compaction region and the width $m_i$ of the high compaction region are the average width of each region, respectively. The widths of the low compaction region and the high compaction region can be adjusted according to the length of the negative electrode plate to be prepared. If the length of each region is too long, the transport rate of the electrolyte solution in a single region will slow down, and the improvement effect brought by the difference of porosity between different regions is not obvious; and if the length of each region is too short, not only the processing will be difficult, but also the liquid transport rate will be unstable.

In some embodiments, the negative electrode plate satisfies the following formula: $0.1 \leq n*m_i/L < 1$, where n is the number of the low compaction region, $m_i$ is the width of the high compaction region, and L is the length of the electrode plate. The inventors have found that when the negative electrode plate satisfies the requirements of the above formula, the charging performance thereof is further improved. The total width of the high compaction region in the length direction of the electrode plate should not be too low, otherwise the improvement effect brought by the difference of porosity is not obvious.

**In** some other embodiments, the direction of the low compaction region is defined as $\Theta$ which satisfies $\Theta_2 \leq \Theta \leq \Theta_1$, wherein $0 < \Theta_1 / \Theta_2 \leq 1$, and $\Theta_1$ and $\Theta_2$ are the included angles between the tangential directions on both sides of the low compaction region and the horizontal direction, respectively. The above formula further defines the shape of the low compaction region on the transverse cross-section of the negative electrode plate, so that the transport rate of the electrolyte solution in the region can be adjusted by changing the shape of the region. **In** some embodiments, the cross-sectional structural shape of the low compaction region has a rectangular, trapezoidal or arc-shaped structure, or an irregular structure. **In** particular, the structural shape of the cross-section of the low compaction region is rectangular or trapezoidal, wherein in the case of trapezoid, the difference between the upper and lower widths of the cross-section of the low compaction region is $\leq 100 \mu m$.

In some embodiments, the length directions of the low compaction region and the high compaction region are parallel to the direction of the negative electrode tab. The length directions of the low compaction region and the high compaction region are parallel to the length direction of the negative electrode plate. The inventors have found that, as compared with other directional arrangements, when the length directions of the low compaction region and the high compaction region are parallel to the direction of the negative electrode tab, the infiltration rate of the electrolyte solution in the active material layer of the negative electrode plate is the largest. The composition of the active material layer of the negative electrode plate is not particularly limited, and materials and structures conventionally used in the art can be used. For example, the negative electrode plate can comprise a negative electrode current collector and a negative electrode material layer provided on at least one surface of the negative electrode current collector. In some embodiments, the negative electrode current collector is a metal foil or a composite current collector comprising a high molecular material substrate layer and a metal layer formed on at least one surface of the high molecular material substrate. In some other embodiments, the negative electrode material layer comprises a negative electrode active substance, and the negative electrode active substance is selected from one or more of graphite, soft carbon, hard carbon, mesocarbon microsphere, carbon fiber, carbon nanotube, elemental silicon, silicon-oxygen compound, silicon-carbon composite, and lithium titanate.

In some embodiments, the densities in the low compaction regions may be the same or different; and in the case of different densities, the density difference between each of the low compaction regions is $\leq 0.5$ g/cm$^3$. When the density difference between each of the low compaction regions is greater than 0.5 g/cm$^3$, the concentration polarization in the active material layer is too large, so that the improvement of the infiltration rate of the electrolyte solution is not significant.

The present application further relates to a method for preparing the negative electrode plate according to the first aspect of the present application, comprising the steps of:

Forming regions with different negative electrode active substance contents by adjusting the viscosities and/or weights of the negative electrode active substance coated on the current collector in different regions thereof; and Cold pressing the negative electrode material layer so that it has the same thickness.

The negative electrode plate of the present invention has no particular requirements for the current collector and the negative electrode active material, and thus various materials conventionally used in the field of batteries can be used. Specific materials can be found in the detailed description of the negative electrode plate below. For the preparation of the negative electrode plate, a conventional preparation method can also be used, for example, by formulating a negative electrode slurry comprising a negative electrode active substance, a conductive agent, a binder and a thickener, and coating the resulting slurry on different regions of the current collector at different weights, thus a negative electrode material layer having regions with different coating weights can be formed on the current collector. Subsequently, the negative electrode plate can be obtained by oven drying, cold pressing and slitting. During cold pressing, the thickness of the negative electrode material layer is pressed to a uniform thickness, so that the negative electrode material layer has a substantially flat surface. At this time, as the weight of the negative electrode slurry coated in each region of the negative electrode material layer is different, the density in each region is also different. With different densities, the porosities thereof are also different. Finally, a negative electrode plate having a plurality of alternately arranged regions with different porosities is obtained. In particular, the method for preparing the negative electrode plate described in the present application does not include the use of any pore-forming agent.

A second aspect of the present application is to provide a secondary battery comprising a negative electrode plate selected from the first aspect of the present application.

A third aspect of the present application is to provide a battery pack comprising a secondary battery selected from the second aspect of the present application.

A fourth aspect of the present application is to provide an electrical apparatus comprising a secondary battery selected from the second aspect of the present application or a battery pack selected from the third aspect of the present application.

The materials of the components of the secondary battery mentioned in the present application can be selected within a wide range. In some embodiments, the secondary battery is particularly a lithium-ion secondary battery. The battery cell of the lithium-ion secondary battery will be described in detail below.

Generally, a lithium-ion secondary battery comprises a positive electrode plate, a negative electrode plate, a separator, and an electrolyte. During charging and discharging of the battery, active ions are intercalated and deintercalated back and forth between the positive electrode plate and the negative electrode plate. The separator is provided between the positive electrode plate and the negative electrode plate and functions to separate. The electrolyte serves to conduct ions between the positive electrode plate and the negative electrode plate.

[Electrolyte solution]

The electrolyte solution serves to conduct ions between the positive electrode plate and the negative electrode plate. The electrolyte solution comprises an electrolyte salt and a solvent.

In the present application, the electrolyte salt may be an electrolyte salt commonly used in lithium-ion secondary batteries, such as a lithium salt, including the above-mentioned lithium salt as a highly heat-stable salt, a lithium salt as a low-impedance additive, or a lithium salt that inhibits aluminum foil corrosion. As an example, the electrolyte salt may be selected from one or more of lithium hexafluorophosphate ($LiPF_6$), lithium tetrafluoroborate ($LiBF_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium difluorophosphate ($LiPO_2F_2$), lithium difluoro bis(oxalato)phosphate (LiDFOP), lithium fluorosulfonate ($LiSO_3F$), difluorodioxalate (NDFOP), $Li_2F(SO_2N)_2SO_2F$, KFSI, CsFSI, $Ba(FSI)_2$ and $LiFSO_2NSO_2CH_2CH_2CF_3$.

The type of the solvent is not particularly limited, and may be selected according to actual needs. In some embodiments, the solvent is a non-aqueous solvent. Optionally, the solvent may comprise one or more of a chain carbonate, a cyclic carbonate, and a carboxylate. In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetrahydrofuran, sulfolane (SF), methylsulfonylmethane (MSM), methyl ethyl sulfone (EMS), and ethyl sulfonyl ethane (ESE).

In some embodiments, the electrolyte solution optionally further comprises other additives. For example, the additives may include a negative electrode film-forming additive, or may include a positive electrode film-forming additive, or may further include an additive that can improve some performance of the battery, such as an additive that improves overcharge performance of the battery, an additive that improves high temperature performance of the battery, and an additive that improves low temperature performance of the battery. As an example, the additive is selected from at least one of a cyclic carbonate compound containing an unsaturated bond, a halogen-substituted cyclic carbonate compound, a sulfate compound, a sulfite compound, a sultone compound, a disulfonic acid compound, a nitrile compound, an aromatic compound, an isocyanate compound, a phosphazene compound, a cyclic anhydride compound, a phosphite compound, a phosphate compound, a borate compound, and a carboxylate compound.

[Positive electrode plate]

The positive electrode plate comprises a positive electrode current collector and a positive electrode active substance layer provided on at least one surface of the positive electrode current collector, and the positive electrode active substance layer comprises a positive electrode active material and a conductive agent.

As an example, the positive electrode current collector has two opposite surfaces in its own thickness direction, and the positive electrode active substance layer is provided on either one or both of the two opposite surfaces of the positive electrode current collector.

In the lithium-ion secondary battery of the present application, the positive electrode current collector can be a metal foil or a composite current collector. For example, an aluminum foil can be used as the metal foil. The composite current collector may comprise a high molecular material substrate layer and a metal layer formed on at least one surface of the high molecular material substrate layer. The composite current collector may be formed by forming a metal material (such as aluminium, aluminium alloy, nickel, nickel alloy, titanium, titanium alloy, silver and silver alloy, etc.) on a high molecular material substrate (substrates such as polypropylene (PP), polyethylene terephthalate (PET), polybutylene terephthalate (PBT), polystyrene (PS), polyethylene (PE), etc.).

The positive electrode active substance layer provided on the surface of the positive electrode current collector comprises a positive electrode active material. The positive electrode active material used in the present application may be any conventional positive electrode active material used in secondary batteries. In some embodiments, the positive electrode active material may comprise one or more selected from lithium transition metal oxides, lithium-containing phosphates with olivine structure and their respective modified compounds. Examples of lithium transition metal oxides may include, but are not limited to, one or more of a lithium-cobalt oxide, a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, and modified compounds thereof. Examples of lithium-containing phosphate with olivine structure may include, but are not limited to, one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, and modified compounds thereof. These materials are all commercially available. The surface of the positive electrode active material may be coated with carbon.

The positive electrode active substance layer optionally comprises a conductive agent. However, the type of the conductive agent is not particularly limited, and those skilled in the art can make a selection according to actual needs. As an example, the conductive agent for the positive electrode material may be selected from one or more of superconducting carbon, acetylene black, carbon black, Ketjen black, carbon dot, carbon nanotube, graphene, and carbon nanofiber.

The positive electrode active substance layer further comprises a binder. The binder is the binder composition described above. In addition to the binder composition described above, the binder may further contain other binders. As an example, the other binders may be one or more of styrene butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

In the present application, the positive electrode plate can be prepared according to a method known in the art. As an example, a carbon-coated positive electrode active material, a conductive agent, and an aqueous binder can be dispersed in a solvent (such as water) to form a uniform positive electrode slurry; and the positive electrode slurry is coated on a positive electrode current collector, and the positive electrode plate is obtained after oven drying, cold pressing and other processes.

[Negative electrode plate]

The negative electrode plate comprises a negative electrode current collector and a negative electrode material layer provided on at least one surface of the negative electrode current collector, and the negative electrode material layer comprises a negative electrode active substance.

As an example, the negative electrode current collector has two opposite surfaces in its own thickness direction, and the negative electrode material layer is provided on either one or both of the two opposite surfaces of the negative electrode current collector.

In the lithium-ion secondary battery of the present application, the negative electrode current collector may be a metal foil or a composite current collector. For example, a copper foil can be used as the metal foil. The composite current collector may comprise a high molecular material substrate layer and a metal layer formed on at least one surface of the high molecular material substrate. The composite current collector may be formed by forming a metal material (such as copper, copper alloy, nickel, nickel alloy, titanium, titanium alloy, silver and silver alloy, etc.) on a high molecular material substrate (substrates such as polypropylene (PP), polyethylene terephthalate (PET), polybutylene terephthalate (PBT), polystyrene (PS), polyethylene (PE), etc.).

In the lithium-ion secondary battery of the present application, the negative electrode material layer generally comprises a negative electrode active substance and an optional binder, an optional conductive agent, and other optional adjuvants, and is generally formed by coating a negative electrode slurry and drying. The negative electrode slurry is generally formed by dispersing the negative electrode active substance and the optional conductive agent and binder in a solvent, and stirring uniformly. The solvent may be N-methyl pyrrolidone (NMP) or deionized water.

The specific type of the negative electrode active substance is not limited, an active substance known in the art that can be used for the negative electrode of lithium-ion secondary batteries can be used, and those skilled in the art can select according to actual needs. As an example, the negative electrode active substance may be selected from one or more of graphite, soft carbon, hard carbon, mesocarbon microsphere, carbon fiber, carbon nanotube, elemental silicon, silicon-oxygen compound, silicon-carbon composite, and lithium titanate.

As an example, the conductive agent may be selected from one or more of superconducting carbon, acetylene black, carbon black, Ketjen black, carbon dot, carbon nanotube, graphene, and carbon nanofiber.

The negative electrode active substance layer further comprises a binder. The binder is the binder composition described above. In addition to the binder composition described above, the binder may further contain other binders. As an example, the other binders may be selected from one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

The other optional adjuvants are for example a thickener (such as sodium carboxymethyl cellulose (CMC-Na)) and the like.

[Separator]

The lithium-ion secondary battery using an electrolyte solution further comprises a separator. The separator is provided between the positive electrode plate and the negative electrode plate and functions to separate. The type of the separator is not particularly limited in the present application, and any well-known separator with a porous structure having good chemical stability and mechanical stability may be selected. In some embodiments, the material of the separator may be selected from one or more of glass fiber, non-woven cloth, polyethylene, polypropylene, and polyvinylidene fluoride. The separator may be a single-layer film or a multi-layer composite film, which is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a stacking process.

In some embodiments, the secondary battery may comprise an outer package. The outer package can be used to encapsulate the above-mentioned electrode assembly and electrolyte.

In some embodiments, the outer package of the secondary battery may be a hard shell, e.g., a hard plastic shell, an aluminum shell, a steel shell, etc. The outer package of the secondary battery may also be a soft pack, such as a bag-type soft pack. The material of the soft pack may be plastic, and examples of the plastic include polypropylene (PP), polybutylene terephthalate (PBT), polybutylene succinate (PBS), and the like.

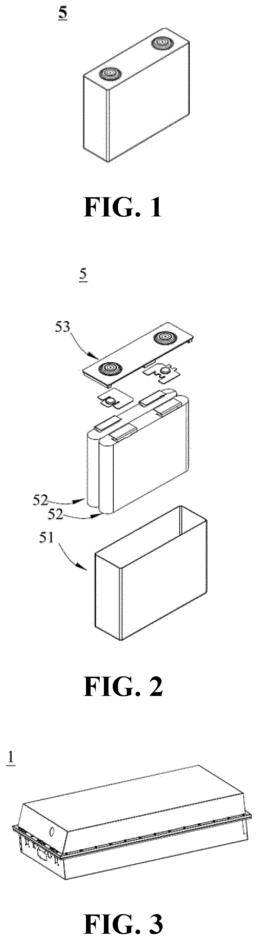

The present application has no particular limitation on the shape of the secondary battery, which can be cylindrical, square or any other shape. For example, Fig. 1 is a lithium-ion secondary battery 5 with a square structure as an example.

In some embodiments, referring to Fig. 2, the outer package may comprise a case 51 and a cover plate 53. Here, the case 51 can comprise a bottom plate and a side plate connected to the bottom plate, with the bottom plate and the side plate enclosing to form an accommodating cavity. The case 51 has an opening that communicates with the accommodating cavity, and the cover plate 53 can cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of the electrode assemblies 52 contained in the lithium-ion secondary battery 5 may be one or more, which can be selected by those skilled in the art according to specific actual needs.

In some embodiments, the lithium-ion secondary batteries may be assembled into a battery module 4, the number of the lithium-ion secondary batteries contained in the battery module 4 may be one or more, and the specific number may be selected by those skilled in the art according to the application and capacity of the battery module 4. In the battery module 4, the plurality of lithium-ion secondary batteries 5 may be sequentially arranged along the length direction of the battery module. Of course, they can be arranged in any other way. The plurality of lithium-ion secondary batteries 5 can be further fixed by fasteners. Optionally, the battery module 4 may further comprise a case having an accommodating space in which the plurality of lithium-ion secondary batteries 5 are accommodated.

In some embodiments, the above-mentioned lithium-ion secondary batteries 5 or battery modules 4 can be assembled into a battery pack 1, and the number of the lithium-ion secondary batteries 5 or the battery modules 4 contained in the battery pack 1 can be selected by those skilled in the art according to the application and capacity of the battery pack 1.

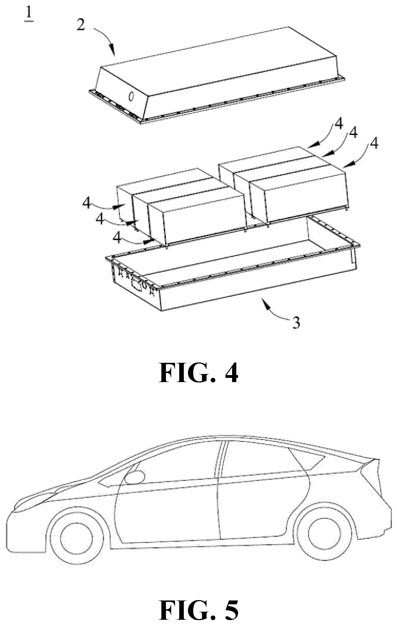

Figs. 3 and 4 show a battery pack 1 as an example. Referring to Figs. 3 and 4, the battery pack 1 may comprise a battery box and a plurality of battery cells provided in the battery box. The battery box comprises an upper box body 2 and a lower box body 3, and the upper box body 2 can cover the lower box body 3 to form a closed space for accommodating the battery cells.

Additionally, the present application further provides an apparatus comprising the battery pack provided by the present application. The battery pack can be used as a power source of the apparatus, and can also be used as an energy storage unit of the apparatus. The apparatus may be, but is not limited to, a mobile device (e.g., a mobile phone and a laptop), an electric vehicle (e.g., an all-electric vehicle, a hybrid electric vehicle, a plug-in hybrid electric vehicle, an electric bicycle, an electric scooter, an electric golf cart, and an electric truck), an electric train, a ship and a satellite, an energy storage system, and the like. For the apparatus, a battery pack can be selected according to its use requirements.

Fig. 5 shows an apparatus as an example. The apparatus is an all-electric vehicle, a hybrid electric vehicle, a plug-in hybrid electric vehicle, or the like. In order to meet the requirements of the apparatus for high power and high energy density of lithium-ion secondary batteries, a battery pack or a battery module may be used.

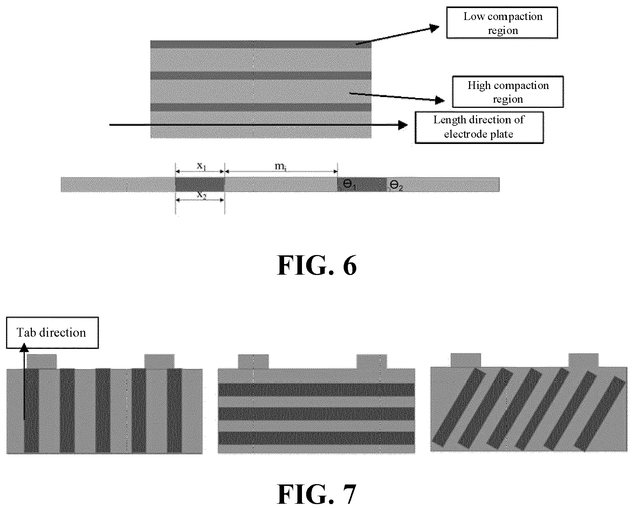

Fig. 6 is a schematic view showing an alternate arrangement of a high compaction region and a low compaction region in a negative electrode plate in an embodiment of the present application, wherein the length directions of the high compaction region and the low compaction region are consistent with the length direction of the electrode plate. The lower part of Fig. 6 shows a schematic cross-sectional view of the electrode plate, wherein $x_1$ is the upper surface width of the low compaction region, $x_2$ is the lower surface width of the low compaction region, $m_i$ is the width of the high compaction region, and $\Theta_1$ and $\Theta_2$ are the included angles between the tangential directions on both sides of the low compaction region and the horizontal direction, respectively.

Fig. 7 is a schematic view showing the directions of the regions with different densities and the direction of the tab in a negative electrode plate in an embodiment of the present application, wherein the directions of the regions with different densities are parallel, perpendicular and inclined to the direction of the tab, respectively.

Examples

Examples of the present application will be described hereinafter. The Examples described below are exemplary and only used to explain the present application, and are not to be construed as limiting the present application. Where specific techniques or conditions were not specified in the Examples, the techniques or conditions described in the literatures in the art or the product specifications were followed. The reagents or instruments used, where the manufacturer was not indicated, are conventional products that are commercially available. If there was no special indication, all content ratios were weight ratios, and all experiments were carried out at normal temperature (25°C) and normal pressure.

Example 1:

Preparation of lithium-ion battery:

Preparation of positive electrode plate

A nickel-cobalt-manganese (NCM) ternary material, a conductive agent carbon black, and a binder polyvinylidene fluoride (PVDF) in a weight ratio of 96.7: 1.7: 1.6 were stirred and mixed uniformly to obtain a positive electrode slurry; then the positive electrode slurry was uniformly coated on a positive electrode current collector, and then subjected to oven drying, cold pressing and slitting to obtain the positive electrode plate.

Preparation of negative electrode plate

Subsequently, an active substance artificial graphite, a conductive agent carbon black, a binder styrene butadiene rubber (SBR) and a thickener sodium hydroxymethyl cellulose (CMC) in a weight ratio of 96.8: 0.7: 1.3: 1.2 were dissolved in a solvent deionized water, mixed uniformly to prepare a negative electrode slurry, which was coated on a current collector. By regulating the water content in the slurry, negative electrode slurries with two viscosities were obtained, and by coating the slurries with different viscosities on the current collector, an electrode plate with alternating high and low coating weights were obtained. Here, the density of high compaction region was 1.7g/cm$^3$, the density of low compaction region was 1.3g/cm$^3$, the number of the high compaction regions was the same as the number of the low compaction regions, and their average widths were also substantially the same. Here, the upper and lower surface widths of the regions with different densities were measured by an off-line laser thickness gauge, and the density of each region was adjusted by the width of the coating region and the weight calculation. Subsequently, the negative electrode plate was obtained by oven drying, cold pressing and slitting.

Preparation of electrolyte solution

In an argon atmosphere glove box ($H_2O$<0.1ppm, $O_2$<0.1ppm), an organic solvent EC/EMC was mixed uniformly in a volume ratio of 3/7, and 12.5% of lithium salt $LiPF_6$ was added and dissolved in the organic solvent, and the mixture was stirred uniformly to obtain a corresponding electrolyte solution.

An 8$\mu$m PE porous film was used as the substrate, and a 2$\mu$m thick ceramic coating was applied on both sides to serve as a separator.

The positive electrode plate, the separator and the negative electrode plate prepared as described above were stacked in sequence, so that the separator was positioned between the positive electrode plate and the negative electrode plate and functioned to separate, and then a bare battery cell was obtained by winding, a tab was welded to the bare battery cell, the bare battery cell was put into an aluminum case, baked at 80 °C to remove water, and then the electrolyte solution was injected and sealed to obtain an uncharged battery. The uncharged battery was then subjected sequentially to standing, hot and cold pressing, chemical formation, shaping, capacity testing and other processes to obtain the lithium-ion secondary battery product of Example 1.

Example 2-10:

Example 1 was repeated, except that the structure and density of the negative electrode active material layer of the negative electrode plate were as shown in Table 1 below (controlled by adjusting the coating amounts of the negative electrode slurries in different regions). As described above in each Example, the corresponding negative electrode plate and the corresponding lithium-ion secondary battery product were prepared.

Comparative examples 1-4

Example 1 was repeated, except that the negative electrode active material layer of the negative electrode plate did not have an alternating arrangement structure of high compaction region and low compaction region, instead had the same density. For Comparative examples 1-4, the densities were 1.6, 1.7, 1.8 and 1.9 g/cm³, respectively. As described above in each Comparative example, the corresponding negative electrode plate and the corresponding lithium-ion secondary battery product were prepared.

The negative electrode plates and the lithium-ion secondary batteries of Examples 1-10 and Comparative examples 1-4 were tested, and the results were shown in Table 1 below.

Table 1:

| No. | Density of low compaction region /g/cm³ | compacted density difference between high and low compaction regions /g/cm³ | Density of high compaction region /g/cm³ | \|x1- x2\| /$\mu$m | Charging time of 20-80% SOC /minute |
|---|---|---|---|---|---|
| Example 1 | 1.3 | 0.4 | 1.7 | 100 | 7.2 |
| Example 2 | 1.3 | 0.3 | 1.6 | 100 | 6.0 |
| Example 3 | 1.5 | 0.2 | 1.7 | 100 | 8.0 |
| Example 4 | 1.5 | 0.1 | 1.6 | 100 | 12.0 |
| Example 5 | 1.5 | 0.3 | 1.8 | 100 | 12.0 |
| Example 6 | 1.5 | 0.3 | 1.8 | 60 | 14.0 |
| Example 7 | 1.5 | 0.3 | 1.8 | 0 | 16.0 |
| Example 8 | 1.7 | 0.1 | 1.8 | 100 | 19.0 |
| Example 9 | 1.7 | 0.2 | 1.9 | 100 | 20.0 |
| Example 10 | 1.8 | 0.1 | 1.9 | 100 | 22.0 |
| Comparative example 1 | / | / | 1.6 | / | 14.4 |
| Comparative example 2 | / | / | 1.7 | / | 18.0 |

(continued)

| No. | Density of low compaction region /g/cm³ | compacted density difference between high and low compaction regions /g/cm³ | Density of high compaction region /g/cm³ | \|x1- x2\| /μm | Charging time of 20-80% SOC /minute |
|---|---|---|---|---|---|
| Comparative example 3 | / | / | 1.8 | / | 20.0 |
| Comparative example 4 | / | / | 1.9 | / | 24.0 |

Measurement of the compacted density of a specific region in the active material layer of the negative electrode plate: during the coating process, the thickness of the coated region was monitored in real time using an off-line laser thickness gauge, and the thickness was positively correlated to the coating weight. An electrode plate in a specific region was taken and weighed, and the following formula was used to calculate the compacted density of the specific region:

$$\text{electrode plate thickness} = \text{coating weight}/\text{compacted density} + \text{substrate thickness}.$$

Measurement of the width of a specific region in the negative electrode active material layer of the negative electrode plate: during the coating process, the thickness of the coated region was monitored in real time using an off-line laser thickness gauge, and the thickness was positively correlated to the coating weight, thus the width of the specific region was determined.

Measurement of the charging performance of lithium-ion secondary battery: the charging time of 20-80% SOC of the battery was measured by three-electrode test method.

As can be seen from the measurement results in the above Table, compared with the negative electrode plate with uniform density in Comparative examples, the secondary battery comprising the negative electrode plate with an alternating arrangement structure of high compaction region and low compaction region in Examples of the present invention showed a significantly shorter charging time of 20-80% SOC, indicating a substantially improved charging performance. Additionally, as can be seen from the comparison between Examples of the present invention, the charging time of 20-80% SOC of the battery could be further improved by selecting the density difference between the high compaction region and the low compaction region as well as the difference between the upper surface width and the lower width of the low compaction region.

While the present application has been described with reference to Examples, various modifications may be made and components therein may be replaced with equivalents without departing from the scope of the present application. In particular, the technical features mentioned in the various Examples can be combined in any manner as long as there is no structural conflict. The present application is not limited to the specific Examples disclosed herein, but rather includes all technical solutions falling within the scope of the claims.

**Claims**

1. A negative electrode plate, comprising a negative electrode current collector and a negative electrode material layer provided on at least one surface of the negative electrode current collector, with the negative electrode material layer comprising a negative electrode active substance, wherein the negative electrode material layer has a structure in which a high compaction region and a low compaction region are continuously and alternately arranged, the high compaction region has a density of 1.6-1.9 g/cm³, the low compaction region has a density of 1.3-1.8 g/cm³, and the density difference between the high compaction region and the low compaction region is 0.1-0.6 g/cm³, optionally 0.2-0.4 g/cm³,
   Wherein the low compaction region has an upper surface width $x_1$ and a lower surface width $x_2$, and the difference between the upper surface width and the lower surface width is $0 \leq |x_1 - x_2| \leq 100$mm.

2. The negative electrode plate according to claim 1, wherein the difference between the upper surface width and the lower surface width of the low compaction region is $0 \leq |x_1 - x_2| \leq 120$μm, optionally $60$μm$\leq |x_1 - x_2| \leq 120$μm, and further optionally $80$μm$\leq |x_1 - x_2| \leq 120$μm.

3. The negative electrode plate according to any one of claims 1 to 2, wherein the width x of the low compaction region is $100$μm-100mm, and optionally $200$μm-30mm.

4. The negative electrode plate according to any one of claims 1 to 3, wherein the width $m_i$ of the high compaction region is 10-100mm, and optionally 20-60mm.

5. The negative electrode plate according to claim 4, which satisfies the following formula: $0.1 \leq n*m_i/L < 1$, where n is the number of the low compaction region, $m_i$ is the width of the high compaction region, and L is the length of the electrode plate.

6. The negative electrode plate according to any one of claims 1 to 5, wherein the direction of the low compaction region is defined as $\Theta$ which satisfies $\Theta_2 \leq \Theta \leq \Theta_1$, wherein $0 < \Theta_1/\Theta_2 \leq 1$, and $\Theta_1$ and $\Theta_2$ are the included angles between the tangential directions on both sides of the low compaction region and the horizontal direction, respectively.

7. The negative electrode plate according to any one of claims 1 to 6, wherein the cross-sectional structural shape of the low compaction region has a rectangular, trapezoidal or arc-shaped structure, or an irregular structure.

8. The negative electrode plate according to any one of claims 1 to 7, wherein the length directions of the low compaction region and the high compaction region are parallel to the direction of the negative electrode tab.

9. The negative electrode plate according to any one of claims 1 to 8, wherein the negative electrode current collector is a metal foil or a composite current collector comprising a high molecular material substrate layer and a metal layer formed on at least one surface of the high molecular material substrate.

10. The negative electrode plate according to any one of claims 1 to 9, wherein the negative electrode active substance is selected from one or more of graphite, soft carbon, hard carbon, mesocarbon microsphere, carbon fiber, carbon nanotube, elemental silicon, silicon-oxygen compound, silicon-carbon composite, and lithium titanate.

11. The negative electrode plate according to any one of claims 1 to 10, wherein the densities in the low compaction regions may be the same or different; and in the case of different densities, the density difference between each of the low compaction regions is less than 0.5 $g/cm^3$.

12. A method for preparing the negative electrode plate according to any one of claims 1 to 11, comprising the steps of:

    forming regions with different negative electrode active substance contents by adjusting the viscosities and/or weights of the negative electrode active substance coated on the current collector in different regions of the current collector; and
    cold pressing the negative electrode material layer so that it has the same thickness.

13. The method according to claim 12, wherein no pore-forming agent is used.

14. A secondary battery, comprising the negative electrode plate according to any one of claims 1 to 11.

15. A battery pack, comprising the secondary battery according to claim 14.

16. An electrical apparatus, comprising the secondary battery according to claim 14 or the battery pack according to claim 15.

5

FIG. 1

5

FIG. 2

FIG. 3

**FIG. 4**

**FIG. 5**

Low compaction
region

High compaction
region

Length direction of
electrode plate

FIG. 6

Tab direction

FIG. 7

## INTERNATIONAL SEARCH REPORT

| International application No. |
| --- |
| **PCT/CN2022/122013** |

### A.    CLASSIFICATION OF SUBJECT MATTER

H01M4/13(2010.01)i

According to International Patent Classification (IPC) or to both national classification and IPC

### B.    FIELDS SEARCHED

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 负极, 阳极, 压实密度, 压密, 高, 低, 不同, batter+, negative, electrode?, anode, lithium, compact+, density, low+, larg+, high+, different

### C.    DOCUMENTS CONSIDERED TO BE RELEVANT

| Category* | Citation of document, with indication, where appropriate, of the relevant passages | Relevant to claim No. |
| --- | --- | --- |
| X | CN 111540910 A (JIANGSU TAFEL NEW ENERGY TECHNOLOGY CO., LTD. et al.) 14 August 2020 (2020-08-14)<br>  description, paragraphs 30-62 and 113-116 | 1-16 |
| X | CN 110943222 A (NINGDE CONTEMPORARY AMPEREX TECHNOLOGY CO., LTD.) 31 March 2020 (2020-03-31)<br>  description, paragraphs 57-60, 131, and 214-219 | 1, 2, 6-16 |
| X | CN 111180738 A (NINGDE CONTEMPORARY AMPEREX TECHNOLOGY CO., LTD.) 19 May 2020 (2020-05-19)<br>  description, paragraphs 119-127 and 312-317 | 1, 2, 6-16 |
| X | CN 111180664 A (NINGDE CONTEMPORARY AMPEREX TECHNOLOGY CO., LTD.) 19 May 2020 (2020-05-19)<br>  description, paragraphs 43-72, 118, and 310-315 | 1, 2, 6-16 |
| X | CN 111180665 A (NINGDE CONTEMPORARY AMPEREX TECHNOLOGY CO., LTD.) 19 May 2020 (2020-05-19)<br>  description, paragraphs 45-81, 116, and 294-299 | 1, 2, 6-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 May 2023** | **29 May 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/122013**

**C.    DOCUMENTS CONSIDERED TO BE RELEVANT**

| Category* | Citation of document, with indication, where appropriate, of the relevant passages | Relevant to claim No. |
|---|---|---|
| X | CN 111180666 A (NINGDE CONTEMPORARY AMPEREX TECHNOLOGY CO., LTD.) 19 May 2020 (2020-05-19) description, paragraphs 43-72, 119, and 334-339 | 1, 2, 6-16 |
| A | CN 108336297 A (HUIZHOU WES NEW ENERGY LTD., CO.) 27 July 2018 (2018-07-27) entire document | 1-16 |
| A | CN 110112366 A (ZHUHAI GUANYU BATTERY CO., LTD.) 09 August 2019 (2019-08-09) entire document | 1-16 |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br><br>**PCT/CN2022/122013**</td></tr>
</table>

| Patent document cited in search report | Publication date (day/month/year) | Patent family member(s) | Publication date (day/month/year) |
|---|---|---|---|
| CN 111540910 A | 14 August 2020 | CN 212062582 U | 01 December 2020 |
| | | WO 2021233366 A1 | 25 November 2021 |
| | | US 2023042302 A1 | 09 February 2023 |
| CN 110943222 A | 31 March 2020 | US 2022037669 A1 | 03 February 2022 |
| | | WO 2020211453 A1 | 22 October 2020 |
| | | EP 3923388 A1 | 15 December 2021 |
| | | EP 3923388 A4 | 20 April 2022 |
| CN 111180738 A | 19 May 2020 | WO 2020258810 A1 | 30 December 2020 |
| | | US 2022102698 A1 | 31 March 2022 |
| | | US 11611064 B2 | 21 March 2023 |
| | | EP 3913711 A1 | 24 November 2021 |
| | | EP 3913711 A4 | 22 June 2022 |
| | | EP 3913711 B1 | 22 February 2023 |
| CN 111180664 A | 19 May 2020 | EP 3930035 A1 | 29 December 2021 |
| | | EP 3930035 A4 | 20 April 2022 |
| | | WO 2020258809 A1 | 30 December 2020 |
| | | US 2022102732 A1 | 31 March 2022 |
| CN 111180665 A | 19 May 2020 | WO 2020258754 A1 | 30 December 2020 |
| | | EP 3916845 A1 | 01 December 2021 |
| | | EP 3916845 A4 | 23 March 2022 |
| | | EP 3916845 B1 | 30 November 2022 |
| | | US 2022093932 A1 | 24 March 2022 |
| CN 111180666 A | 19 May 2020 | US 2022093933 A1 | 24 March 2022 |
| | | JP 2022539769 A | 13 September 2022 |
| | | KR 20220024949 A | 03 March 2022 |
| | | EP 3993110 A1 | 04 May 2022 |
| | | WO 2020258860 A1 | 30 December 2020 |
| | | IN 202117061301 A | 07 January 2022 |
| CN 108336297 A | 27 July 2018 | None | |
| CN 110112366 A | 09 August 2019 | None | |

Form PCT/ISA/210 (patent family annex) (July 2022)